# EUROPÄISCHE PATENTSCHRIFT

(11) **EP 0 668 016 B1**
(45) Veröffentlichungstag und Bekanntmachung des Hinweises auf die Patenterteilung: **08.07.1998**
(21) Anmeldenummer: 95890019.3
(22) Anmeldetag: 25.01.1995
(51) Int. Cl.: A21C 5/04

(54) **Vorrichtung zur Herstellung von Teigportionen für rustikale Brötchen**
Device for producing dough portions for rustic bread rolls
Appareil pour la production de morceaux de pâte pour les petits pains rustiques

(30) Priorität: 10.02.1994 AT 267/94
(43) Veröffentlichungstag der Anmeldung: 23.08.1995
(73) Patentinhaber: König, Helmut, A-8045 Graz (AT)
(72) Erfinder: König, Helmut, A-8045 Graz (AT)
(74) Vertreter: Wildhack, Helmut, Dipl.-Ing. Dr.

(56) Entgegenhaltungen:
- DE-C- 3 405 977
- DE-C- 4 133 450
- US-A- 3 504 639

## Beschreibung

Die Erfindung bezieht sich auf eine Vorrichtung zur Herstellung von Teigportionen für rustikale Brötchen durch Zerteilung einer Teigmasse in Portionen mit im wesentlichen viereckiger Grundform, wobei die Teigmasse an einer Portionierstation mittels zumindest eines Eindrückwerkzeuges, insbesondere eines Schiebers, in zumindest eine Form eingedrückt wird, deren Querschnitt viereckige Grundform hat, und wobei eine Transporteinrichtung vorgesehen ist, welche die mit Teigmasse gefüllte Form zuerst an einer Abstreifkante vorbeiführt, welche überschüssige Teigmasse von der Form abstreift, und sodann zu einer Ablegestation führt, in welcher die Teigportion mittels eines in der Form geführten Kolbens aus der Form ausgestoßen wird.

Sogenannte "rustikale Brötchen" weisen im wesentlichen eine Rechtecksform auf und werden durch Backen ungewirkter Teigstücke hergestellt. Gegebenenfalls weisen solche rustikale Brötchen eine Bestreuung, z.B. Mohn oder Sesam, auf.

Ursprünglich wurden die zur Herstellung solcher rustikaler Brötchen erforderlichen Teigportionen handwerklich dadurch hergestellt, daß aus Teigfladen entsprechender Schichtstärke mit einem Gitterrost die viereckigen Teigportionen ausgeschnitten wurden. Diese Vorgangsweise ist zeitraubend und mühsam. Es ist daher bereits eine Maschine entwickelt worden (bekannt unter dem Handelsnamen "QUADRO-STAR"), welche einen händisch vorbereiteten Teigstrang einem Walzenstuhl zuführt, der den Teigstrang in eine flache Gestalt gleichmäßig verteilt. Aus der so erhaltenen flachen Teigmasse werden mittels einer Messerwalze mehrere Einzelstränge geschnitten, die dann in einer Schneidestation in der Länge mittels oszillierender Schneidemesser oder Fallschneiden unterteilt werden. Das Endprodukt sind rechteckige flache Teigstücke, deren Gestalt annähernd der Gestalt der gewünschten rustikalen Brötchen entspricht. Nachteilig hieran sind jedoch der geringe Automatisierungsgrad, da die bekannte Maschine hinsichtlich der Breite bzw. Schichtstärke händisch vorbereitete Teigstränge benötigt, und weiters die unansehnliche, von der gewünschten viereckigen Grundform wesentlich abweichende Gestalt der fertigen Brötchen.

Es ist auch eine Vorrichtung der eingangs geschilderten Art bekannt (GB-A 443 596), bei welcher der Teig mittels eines Preßkolbens in eine Aufnahmekammer am Mantel einer reversierend verdrehten Trommel eingedrückt wird, welche bei der reversierenden Bewegung die Kammer von der Portionierstation in die Ablegestation und wieder zurückführt. Obwohl die Preßkammer rechteckigen Querschnitt aufweist, hat die Erfahrung gezeigt, daß auch mit einer solchen Vorrichtung rustikale Brötchen in annehmbarer Qualität nicht herstellbar sind. Die Ursache dafür liegt darin, daß die Teigportion beim Backen ihre viereckige Form verliert und damit das fertige Brötchen unansehnlich wird.

Die Erfindung setzt sich zur Aufgabe, eine Maschine zur Herstellung von Teigportionen für rustikale Brötchen der eingangs beschriebenen Art so zu verbessern, daß die Herstellung vollautomatisch erfolgt, also das zu portionierende Teigvolumen keiner händischen Vorbearbeitung bedarf, wobei dennoch eine optisch ansprechende Gestalt der aus den Teigportionen gebackenen rustikalen Brötchen erzielt wird. Die Erfindung löst diese Aufgabe, ausgehend von einer Vorrichtung der eingangs beschriebenen Art, dadurch daß die viereckige Grundform des Querschnittes der Form und des in ihr passend geführten Kolbens abgerundete Ecken hat, wobei alle vier Seiten des Viereckes zwischen den Abrundungen der Ecken bogenförmig eingezogen sind. Mit einer solchen Vorrichtung lassen sich die Teigportionen, welche für die Herstellung der viereckigen rustikalen Brötchen erforderlich sind, problemlos maschinell ohne händische Vor- oder Nacharbeit herstellen. Überraschenderweise zeigt es sich, daß die bogenförmigen Einziehungen an den Seiten des Viereckes nach dem Backen der rustikalen Brötchen ausgeglichen sind, d.h., die fertig gebackenen rustikalen Brötchen haben die gewünschte viereckige, in der Regel rechteckige Gestalt, jeweils mit den Abrundungen an den Ecken des Viereckes bzw. Rechteckes. Es kann vermutet werden, daß dies darauf zurückzuführen ist, daß die Abstreifung des überschüssigen Teiges mittels der Abstreifkante in den Teig eine Spannung hineinbringt, die durch die Einziehungen ausgeglichen wird.

Es wäre möglich, die Form als Einzelform unter der Abstreifkante zu führen, etwa mit einer Hin- und Herbewegung. Günstiger ist es jedoch gemäß einer bevorzugten Ausführungsform der Erfindung, wenn mehrere Formen in Reihen am Mantel einer um eine horizontale Achse drehbar gelagerten und durch einen Antrieb schrittweise in gleichbleibender Richtung verdrehten Trommel angeordnet sind, an deren Außenumfang die Abstreifkante anliegt, wobei jede Form von einer Öffnung im Mantel der Trommel gebildet ist. Eine solche Vorrichtung erlaubt eine Herstellung der Teigstücke für rustikale Brötchen in industriellem Maßstab bei geringem Aufwand und einfachem Antrieb. Außerdem stehen für solche Konstruktionen die Erfahrungen aus den Portioniervorrichtungen für übliche Teigstücke zur Verfügung, so daß auf von dort bekannte Konstruktionselemente zurückgegriffen werden kann (z.B. AT-PS 376 107, AT-PS 395 364, AT-PS 395 928).

Aus Herstellungsgründen ist es zweckmäßig, die Abrundungen der Ecken und bzw. oder die Einziehungen von Kreisbögen zu bilden. Erfahrungsgemäß kann sich im Rahmen der Erfindung der Radius der Abrundungen der Ecken zum Radius der Einziehungen wie 1:4 bis 1:6, vorzugsweise wie 1:5 verhalten.

Da häufig der Wunsch in einer Bäckerei besteht, sowohl rustikale Brötchen als auch andersartige Brötchen, z.B. Semmeln, mit geringem maschinellen Aufwand erzeugen zu können, sieht die Erfindung gemäß einer Weiterbildung vor, am Mantel der Trommel Öffnungen mit viereckiger abgerundeter Querschnittsgrundform für die Herstellung von Teigportionen für rustikale Brötchen abwechselnd mit Öffnungen mit eckiger, nicht abgerundeter Querschnittsform für die Herstellung gewirkter Teigportionen vorzusehen, für deren Wirkung im Bereich des oberen Scheitels der Trommel eine Wirkvorrichtung vorgesehen ist, der eine Ausschalteinrichtung für die Herstellung rustikaler Brötchen zugeordnet ist. Je nach der Art der herzustellenden Brötchen werden dann entweder die den rustikalen Brötchen zugeordneten Öffnungn wirksam gemacht oder die dazwischen angeordneten andersartigen Öffnungen. Dies kann in einfacher Weise dadurch erfolgen, daß der Trommelvorschub jeweils von gleichartiger Öffnung zu gleichartiger Öffnung erfolgt und daß eine Umstelleinrichtung vorgesehen ist, mit welcher der Vorschub von der einen Öffnungsart auf die andere Öffnungsart umgeschaltet wird, wobei die Trommel so weit verdreht wird, daß jeweils auf die gewünschte Öffnungsart übergegangen ist. Es werden also dann beim Trommelvorschub jeweils nur die Öffnungen der gewünschten Querschnittsform wirksam und je nachdem, welche Querschnitsform gerade als wirksam gewählt wird, wird die Wirkvorrichtung zugeschaltet oder nicht.

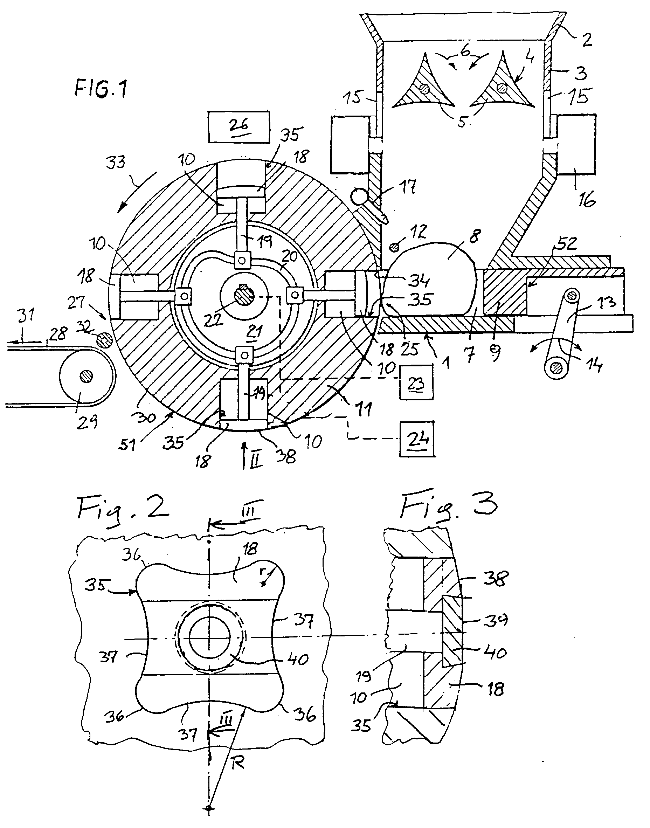

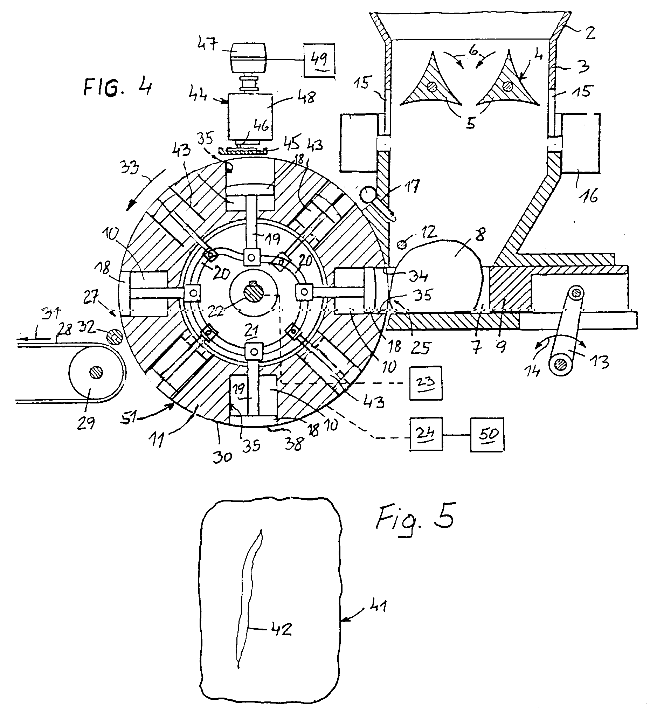

In der Zeichnung sind Ausführungsbeispiele des Erfindungsgegenstandes schematisch dargestellt. Fig.1 zeigt einen Vertikalschnitt durch eine erstes Ausführungsbeispiel der erfindungsgemäßen Vorrichtung. Fig.2 ist eine Ansicht eines Details der Fig.1 in Richtung des Pfeiles II, in größerem Maßstab. Fig.3 ist ein Schnitt nach der Linie III-III der Fig.2. Fig.4 ist ein Vertikalschnitt durch ein zweites Ausführungsbeispiel und Fig.5 zeigt eine Draufsicht auf ein fertig gebackenes rustikales Brötchen.

Bei der Ausführungsform nach Fig.1 trägt ein Gestell 1 einen Einfülltrichter 2 für den zu portionierenden Teig, der in Form großer Klumpen in den Einfülltrichtr 2 eingefüllt werden kann. Der Einfülltrichter 2 führt zu einem kurzen Schacht 3, in welchem eine Vorportioniereinrichtung 4 in Form zweier um parallele horizontale Achsen drehbarer Sternwalzen 5 angeordnet ist. Diese Sternwalzen 5 werden von einem nicht dargestellten Antrieb intermittierend gegensinnig angetrieben, die Umlaufrichtungen der beiden Sternwalzen 5 sind mit Pfeilen 6 angedeutet. Die Sternwalzen 5 sind so ausgebildet, daß sie bei ihrer Umlaufbewegung den Teig aus dem Einfülltrichter 2 in eine unterhalb des Schachtes 3 liegende Kammer 7 fördern. Bleiben die Sternwalzen 5 stehen, so schneiden sie mit ihren Armen den Teig ab und verhindern somit ein Nachrutschen von Teig aus dem Einfülltrichter 2 in die Kammer 7. In die Kammer 7 werden somit vorportionierte Teigmengen 8 eingebracht, aus denen der Teig mittels eines Eindrückwerkzeuges 52 in Form eines in der Kammer 7 geführten Schiebers 9 der Teig in Öffnungen 10 eingedrückt wird, die am Mantel einer Trommel 11 in vier Reihen in gleichmäßigen Abständen voneinander angeordnet sind. Die Trommel 11 ist um eine horizontale Achse drehbar im Gestell 1 gelagert und durch einen Antrieb 24 in Richtung des Pfeiles 33 schrittweise angetrieben.

Das Teigvolumen in der Kammer 7 wird von einem Fühler 12 beliebiger Bauart derart überwacht, daß der Antrieb der Sternwalzen 5 unterbrochen wird, sobald das Teigvolumen 8 in der Kammer 7 einen vorbestimmten Wert überschreitet. Damit wird verhindert, daß der Teig in der Kammer 7 übermäßig gequetscht wird. Geht das Teivolumen in der Kammer 7 so weit zurück, daß der Fühler 12 nicht mehr beaufschlagt wird, so wird der Antrieb der Sternwalzen 5 wieder eingeschaltet und fördert Teig in den unteren Teil des Schachtes 8 und somit in die Kammer 7 nach.

Das Teigverhalten im Schacht 3 kann durch Fenster 15 beobachtet werden. Im Schacht 3 kann der zu verarbeitende Teig mit Mehl bestäubt und/oder beölt werden. Hiefür kann eine Bestaubungseinrichtung 16 und/oder eine Beölungseinrichtung 17 vorgesehen sein.

Für die hin- und hergehende Bewegung des Schiebers 9 ist dieser mit einer Schwinge 13 verbunden, die in Richtung des Doppelpfeiles 14 hin-und herbewegt wird.

In jeder Öffnung 10 ist ein Kolben 18 passend geführt. An seiner der Trommelachse zugewendeten Seite ist jeder Kolben 18 mit einem Stössel 19 verbunden, mit welchem er an einer Führung 20 einer Kurvenscheibe 21 geführt ist. Die Kurvenscheibe 21 ist auf eine in der Achse der Trommel 11 liegende Welle 22 drehfest aufgesetzt und mit dieser relativ zur Trommel 11 verdrehbar. Eine Relativverdrehung der Kurvenscheibe 21 in Bezug auf die Trommel 11 bewirkt, daß die Kolben 18 in ihren Öffnungen 10 mehr oder weniger vor- bzw. zurückgeschoben werden, entsprechend der Gestalt der Führung 20. Für diese Relativverdrehung der Kurvenscheibe 21 ist ein nur schematisch dargestellter Antrieb 23 vorgesehen, der in geeigneter Weise auf den Antrieb 24 für den schrittweisen Trommelvorschub abgestimmt ist. Zweckmäßig erfolgt dies so, daß während des Vorschubschrittes der Trommel 11 die Kurvenscheibe 21 in der gleichen Richtung verdreht wird, so daß während der Vorschubschrittes der Trommel 11 keine nennenswerte Bewegung der Kolben 18 in ihren Öffnungen 10 erfolgt. Während der anschließenden Pause der schrittweisen Trommelbewegung wird hingegen die Kurvenscheibe 21 durch ihren Antrieb 23 in die Ausgangslage zurückgedreht, wodurch sich die zuvor erwähnte Bewegung der Kolben 18 in ihren Öffnungen 10 ergibt. Die Anordnung ist hiebei so getroffen, daß an einer der Kammer 7 gegenüberliegenden Portionierstelle 25 die Kolben 18 zurückgezogen werden, wodurch ein Ansaugeffekt auf den Teig 8 ausgeübt und dadurch die Eindrückung des Teiges mittels des Schiebers 9 erleichtert wird. Beim nächsten Schritt der Trommelbewegung gelangen die Kolben 18 in den Bereich des oberen Scheitels der Trommel 11, wo eine weitere Bearbeitungsstation 26 vorgesehen sein kann, z.B. eine Station, welche eine Bestreuung der in den Öffnungen 10 befindlichen Teigstücke durchführt, etwa mit Mohn oder Sesam. Hiebei können die Kolben 18 während dieser Bestreuung noch etwas weiter zurückgezogen werden, um Verluste an Bestreuungsmaterial zu vermeiden.

Beim nächsten Trommelschritt gelangen die Öffnungen 10 in den Bereich einer Ablegestation 27, an welcher die Kolben 18 in den Öffnungen 10 vorgeschoben werden, so daß die in den Öffnungen 10 befindlichen Teigstücke aus den Öffnungen 10 ausgeworfen werden. Die Teigstücke gelangen dadurch auf Transportbänder 28, insbesondere Spreizbänder, die um Umlenkrollen 29 geführt sind, die nahe dem Umfang 30 der Trommel 11 angeordnet sind. Die Transportbänder 28 laufen in Richtung des Pfeiles 31 und führen dadurch die portionierten Teigstücke von der Trommel 11 weg. Um die Übergabe der Teigstücke von den Öffnungen 10 auf die Transportbänder 28 sicherer zu gestalten, kann eine Übergabewalze 32 im Spalt zwischen den Transportbändern 28 und dem Umfang 30 der Trommel 11 angeordnet sein.

Die schrittweise Umlaufbewegung der Trommel 11 in Richtung des Pfeiles 33 führt sodann die betreffende Öffnung 10 wieder an die Portionierstelle 25 zurück.

Die eigentliche Portionierung erfolgt durch eine Abstreifkante 34 des Gestelles 1, welche überschüssigen Teig von der in der Portionierstelle 25 befindlichen Öffnung 10 abstreift, sobald sich die Trommel 11 aus der Portionierstelle 25 herausbewegt.

Zur Herstellung von Teigportionen, die für das Backen rustikaler Brötchen geeignet sind, hat jede Öffnung 10 eine besondere Gestalt. Die Öffnung 10 bildet hiebei eine Form 35 für das zu portionierende Teigstück, in welcher Form 35 der Kolben 18 passend geführt ist. Diese Form 35 bzw. die sie bildende Öffnung 10 hat viereckige Grundform, die im in Fig.2 dargestellten Beispiel quadratisch ist, jedoch auch langgestreckt sein kann. Die Ecken dieser quadratischen Grundform sind mit Abrundungen 36 versehen. Die Seiten des Viereckes sind zwischen den Abrundungen 36 mit bogenförmigen Einziehungen 37 ausgebildet. Diese Einziehungen 37 gehen in die Abrundungen 36 sanft über. Aus Gründen der einfachen Herstellung sind sowohl die Einziehungen 37 als auch die Abrundungen 36 von Kreisbögen gebildet. In der Praxis hat es sich erwiesen, daß günstige Verhältnisse für eine im wesentlichen, viereckige Grundform dann geschaffen werden, wenn der Radius r der Abrundungen 36 etwa ein Viertel bis ein Sechstel, vorzugsweise etwa ein Fünftel des Radius R der Einziehungen 37 beträgt.

Die Stirnfläche 38 des Kolbens 18 kann entlang einer Kreiszylinderfläche geformt sein, so daß diese Fläche bündig mit der Umfangsfläche 30 der Trommel 11 verläuft. Aus Gründen der einfacheren Herstellung kann diese Stirnfläche 38 jedoch im Profil auch einem Polygonzug folgen (Fig.3), der von drei ebenen Abschnitten gebildet ist. Im mittleren Abschnitt 39 ist hiebei eine Schraubkappe 40 angeordnet, die mit dem Stößel 19 verschraubt ist und passend in den Grundkörper des Kolbens 18 eingesetzt ist, zweckmäßig mit schwalbenschwanzförmigem Querschnitt, so daß sich der Grundkörper des Kolbens 18 von der Schraubkappe 40 nicht trennen kann. Nach lösen der Schraubkappe 40 vom Stößel 19 läßt sich die Schraubkappe mit dem Kolben 18 abziehen, wodurch die Zugänglichkeit zu den innenliegenden Bauteilen gegeben ist. Die Stirnfläche der Schraubkappe 40 schließt bündig mit der Oberfläche des Abschnittes 39 ab.

Im Betrieb entstehen aus den Teigportionen, deren Umfang etwa jenem der Form 35 bzw. des Kolbens 18 entspricht, nach dem Backen im wesentlichen rechteckige Brötchen 41, deren Gestalt etwa jener nach Fig.5 entspricht. Überraschenderweise verlaufen die Seiten der rechteckigen Grundform der Brötchen 41 annähernd gerade und parallel zueinander, die Einziehungen 37 der Form sind somit ausgeglichen. Eine Ursache dafür dürfte darin zu sehen sein, daß die Abstreifkante 34 bei ihrer Funktion in den in der Form 35 befindlichen Teig eine Spannung hineinbringt, die sich beim Backvorgang ausgleicht. Die Oberfläche der Brötchen 41 ist knusprig und zeigt häufig Einrisse 42 unterschiedlicher Größe und Gestalt.

Die Ausführungsvariante nach Fig.4 eignet sich sowohl für die Herstellung von Teigportionen, die für rustikale Brötchen bestimmt und daher ungewirkt sind, als auch für die Herstellung von gewirkten Teigportionen, etwa für das Backen von Semmeln usw. Hiezu hat die Trommel 11 an ihrem Umfang 30 Öffnungen 10 mit viereckiger, abgerundeter Grundform ihres Querschnittes für die Herstellung von Teigportionen für rustikale Brötchen, welche Öffnungen 10 jenen nach Fig.1 entsprechen. Zusätzlich hiezu sind am Mantel 30 der Trommel 11 weitere Öffnungen 43 abwechselnd mit den Öffnungen 10 vorgesehen. Beide Öffnungsarten können in Reihen in Längsrichtung der Trommel 11 vorgesehen sein. Die zusätzlichen Öffnungen 43 haben eckige, nicht abgerundete Querschnittsform, vorzugsweise sechseckige Querschnittsform und dienen zur Herstellung gewirkter Teigportionen. Auch in diesen Öffnungen 43 sind Kolben 18 mit Stösseln 19 in analoger Weise geführt, wie dies für die in den Öffnungen 10 befindlichen Kolben 18 beschrieben wurde. Zur Wirkung dieser in den Öffnungen 43 befindlichen Teigstücke dient eine Wirkvorrichtung 44, die im Bereiche des oberen Scheitels der Trommel 11 angeordnet ist. Diese Wirkvorrichtung 44 hat in bekannter Weise eine mit stufenförmigen Vertiefungen über jeder Öffnung 43 versehene Wirkplatte 45, die über Exzenter 46 von einem Motor 47 über ein Getriebe 48 zu einer Kreisbewegung angetrieben wird. Um zu gewährleisten, daß diese Wirkvorrichtung 44 nur für die in den Öffnungen 43 befindlichen Teistücke wirksam wird und nicht auch für die in den Öffnungen 10 befindlichen Teigstücke, ist für diese Wirkvorrichtung 44 eine Ausschalteinrichtung 49 vorgesehen, welche die Wirkvorrichtung unwirksam macht, wenn sich eine zur Herstellung von Teigportionen für rustikale Brötchen bestimmte Öffnung 10 unter der Wirkvorrichtung 44 befindet. Diese Ausschalteinrichtung 49 kann beliebiger Bauartsein, z.B. ein Schalter, der von einem Geberkreuz betätigt wird, welches an einem Seitenschild der Trommel 11 befestigt ist und dessen Arme den Öffnungen 10 zugeordnet sind.

Die Trommel 11 einer solchen Vorrichtung könnte in Schritten bewegt werden, welche dem Abstand von Öffnungsreihe zu Öffnungsreihe, also von Öffnung 10 zu Öffnung 43, entsprechen, d.h. für winkelmäßige Verdrehungen von jeweils 45°. Da dies jedoch jeweils jeden zweiten Schritt der Trommel funktionslos machen würde, ist es zweckmäßiger, eine Umschalteinrichtung 50 vorzusehen, welche dem Antrieb 24 für die Trommelbewegung derart zugeordnet ist, daß dieser Antrieb um jeweils 45° vor- oder zurückgestellt werden kann, wobei die Schritte der Bewegung der Trommel dann jeweils 90° betragen. Dadurch ist es möglich, jeweils nur eine Größe der Öffnungen 10 bzw. 43 wirksam zu machen. Wie bereits erwähnt, bleibt für die Öffnungen 10 die Wirkvorrichtung 44 unwirksam und tritt nur in Funktion, wenn sich unter ihr eine Öffnung 43 befindet.

Es ist ersichtlich, daß die Trommel 11 eine Transporteinrichtung 51 bildet, welche die mit Teigmasse gefüllte Form 35 zuerst an der Abstreifkante 34 vorbei führt, so daß dort durch Abstreifung überschüssiger Teigmasse von der Form 35 die exakte Portionierung für die Teigportion zur Herstellung der rustikalen Brötchen erfolgt. Sodann transportiert die Transportvorrichtung 51 die in der betreffenden Form 35 befindliche Teigportion zur Ablegestation 27, wo die Auswerfung des betreffenden Teigstückes aus der Form 35 erfolgt. Es ist einzusehen, daß eine solche Transporteinrichtung 51 nicht unbedingt von einer Trommel 11 gebildet sein muß. Vielmehr könnte auch eine Formschalenkette Verwendung finden, oder auch nur eine einzige Form 35, welche zwischen der Portionierstelle 25 und der Ablegestation 27 hin und her transportiert wird.

## Patentansprüche

1. Vorrichtung zur Herstellung von Teigportionen für rustikale Brötchen durch Zerteilung einer Teigmasse in Portionen mit im wesentlichen viereckiger Grundform, wobei die Teigmasse an einer Portionierstation (25) mittels zumindest eines Eindrückwerkzeuges, insbesondere eines Schiebers (9), in zumindest eine Form (35) eingedrückt wird, deren Querschnitt viereckige Grundform hat, und wobei eine Transporteinrichtung (51) vorgesehen ist, welche die mit Teigmasse gefüllte Form (35) zuerst an einer Abstreifkante (34) vorbeiführt, welche überschüssige Teigmasse von der Form (35) abstreift und sodann zu einer Ablegestation (27) führt, in welcher die Teigportion mittels eines in der Form (35) geführten Kolbens (18) aus der Form (35) ausgestoßen wird, dadurch gekennzeichnet, daß die viereckige Grundform des Querschnittes der Form (35) und des in ihr passend geführten Kolbens (18) abgerundete Ecken hat, wobei alle vier Seiten des Viereckes zwischen den Abrundungen (36) der Ecken bogenförmig eingezogen sind.

2. Vorrichtung nach Anspruch 1, dadurch gekennzeichnet, daß mehrere Formen (35) in Reihen am Mantel einer um eine horizontale Achse drehbar gelagerten und durch einen Antrieb (24) schrittweise in gleichbleibender Richtung verdrehten Trommel (11) angeordnet sind, an deren Außenumfang (30) die Abstreifkante (34) anliegt, wobei jede Form (35) von einer Öffnung (10) im Mantel der Trommel (11) gebildet ist.

3. Vorrichtung nach Anspruch 1 oder 2, dadurch gekennzeichnet, daß die Abrundungen (36) der Ecken und bzw. oder die Einziehungen (37) Kreisbögen sind.

4. Vorrichtung nach Anspruch 3, dadurch gekennzeichnet, daß der Radius (r) der Abrundungen (36) der Ecken sich zum Radius (R) der Einziehungen (37) wie 1:4 bis 1:6, vorzugsweise wie 1:5 verhält.

5. Vorrichtung nach einem der Ansprüche 2 bis 4, dadurch gekennzeichnet, daß am Umfang (30) der Trommel (11) Öffnungen (10) mit viereckiger abgerundeter Querschnittsgrundform für die Herstellung von Teigportionen für rustikale Brötchen abwechselnd mit Öffnungen (43) mit eckiger, nicht abgerundeter Querschnittsform für die Herstellung gewirkter Teigportionen angeordnet sind, für deren Wirkung im Bereich des oberen Scheitels der Trommel (11) eine Wirkvorrichtung (44) vorgesehen ist, der eine Ausschalteinrichtung (49) für die Herstellung rustikaler Brötchen zugeordnet ist.

## Claims

1. Apparatus for producing dough portions for rustic bread rolls by dividing a dough lump in portions of substantially square basic shape, wherein the dough lump is pressed at a portioning station (25) into at least one die (35) of square cross section by means of at least one pressing tool, in particular a slide (9), wherein a conveying means (51) is provided which conveys the die (35) filled with dough at first past a stripping edge (34) which strips excessive dough off the die (35) and then conveys the die to a lay down station (27) at which the dough portion is ejected from the die (35) by means of a piston (18) guided within the die (35), characterised in that the square basic shape of the cross section of the die (35) and of the piston (18) matchingly guided within it has rounded corners, all four sides of the square being archedly retracted between the roundings (36) of the corners.

2. Apparatus according to claim 1, characterised in that a plurality of dies (35) is disposed in rows at the periphery of a drum (11) bearingly supported for rotation around a horizontal axis and driven for stepwise rotation in constant direction by a drive means (24), the stripping edge (34) contacting the periphery (30) of the drum, each die (35) being constituted by an opening (10) in the periphery of the drum (11).

3. Apparatus according to claim 1 or 2, characterised in that the roundings (36) of the corners and/or the roundings (37) are arcs of a circle.

4. Apparatus according to claim 3, characterised in that the radius (r) of the roundings (36) at the corners is in the ratio of 1 : 4 to 1 : 6, preferably 1 : 5, to the radius (R) of the retractings (37).

5. Apparatus according to any of claims 2 to 4, characterised in that at the periphery (30) of the drum (11) openings (10) having a square rounded cross section basic shape for the production of dough portions for rustic bread rolls are disposed alternating with openings (43) having a cornered, not rounded cross section shape for the production of kneaded dough portions, for kneading thereof a kneading device (44) being provided in the region of the upper summit of the drum (11), to which kneading device a switch off-device (49) for the production of rustic bread rolls is associated.

## Revendications

1. Appareil pour la production de morceaux de pâte pour les petits pains rustiques par diviser une masse de pâte en morceaux essentiellement d'une forme de base quadrangulaire, la masse de pâte étant pressée dans une station de préportionage (25) au moyens d'au moins un outil à fourrer, particulièrement d'un tiroir (9), dans au moins un moule (35) dont le profil a une forme de base quadrangulaire, un dispositif de transport (51) étant prévu passant d'abord le moule (35) rempli de la masse de pâte devant une arête racleuse (34), qui enlève la masse de pâte en excès du moule (35), et l'amène après à une station de dépôt (27), dans laquelle le morceau de pâte est expulsée du moule (35) au moyens d'un piston (18) guidé dans le moule (35), charactérisé en ce que la forme de base quadrangulaire du profil du moule (35) et du piston (18) guidé dans celui-ci de manière juste a des coins arrondis, toutes les quatre côtés du quadrangle étant refoncées en arc entre les arrondis (36) des coins.

2. Appareil selon la revendication 1, charactérisé en ce que plusieurs moules (35) sont disposés en files à la nappe d'un tambour (11) logé rotativement autour d'un axe horizontal et tourné d'une manière intermittente dans un sens invariable par un dispositif d'entraînement (24), l'arête racleuse (34) s'engageant à la face extérieure (30) du tambour, chaque moule (35) étant formé par une ouverture (10) de la nappe du tambour (11).

3. Appareil selon la revendication 1 ou 2, charactérisé en ce que les arrondis (36) des coins et/ou les renfoncements (37) sont des arcs circulaires.

4. Appareil selon la revendication 3, charactérisé en ce que le rayon (r) des arrondis (36) des coins est dans un rapport au rayon (R) des renfoncements (37) de 1:4 à 1:6, préférablement de 1:5.

5. Appareil selon une des revendications 2 à 4, charactérisé en ce qu'à la nappe (30) du tambour (11) des ouvertures (10) ayant une forme de base du profile quadrangulaire et arrondie pour la production de morceaux de pâte pour les petits pains rustiques sont disposées en alternant avec des ouvertures (43) ayant une forme de profile angulaire, pas arrondis pour la production de morceaux de pâte pétris, pour la pétrissage de lesquelles un dispositif de pétrissage (44) est prévu dans la zone du sommet supérieur du tambour (11), à laquelle un dispositif interrupteur (49) pour la production des petits pains rustiques est attribué.
